(19) Europäisches Patentamt
European Patent Office
Office européen des brevets

(11) EP 4 692 235 A1

(12) EUROPEAN PATENT APPLICATION
published in accordance with Art. 153(4) EPC

(43) Date of publication:
**11.02.2026 Bulletin 2026/07**

(21) Application number: **24781340.5**

(22) Date of filing: **18.01.2024**

(51) International Patent Classification (IPC):
***C08L 69/00** (2006.01)* ***C08L 67/02** (2006.01)*
***C08K 5/521** (2006.01)* ***C08K 5/5399** (2006.01)*
***C08K 3/34** (2006.01)* ***C08K 7/14** (2006.01)*

(52) Cooperative Patent Classification (CPC):
**C08K 3/34; C08K 5/521; C08K 5/5399; C08K 7/14; C08L 67/02; C08L 69/00**

(86) International application number:
**PCT/KR2024/095031**

(87) International publication number:
**WO 2024/205350 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 KR 20230042391**

(71) Applicant: **LOTTE CHEMICAL CORPORATION
Seoul 05551 (KR)**

(72) Inventors:
- **HA, Dong In
Uiwiang-si Gyeonggi-do 16073 (KR)**
- **KANG, Tae Gon
Uiwiang-si Gyeonggi-do 16073 (KR)**
- **KIM, Su Ji
Uiwiang-si Gyeonggi-do 16073 (KR)**
- **YANG, Sung Woo
Uiwiang-si Gyeonggi-do 16073 (KR)**
- **LEE, Seo Yun
Uiwiang-si Gyeonggi-do 16073 (KR)**

(74) Representative: **Germain Maureau
12, rue Boileau
69006 Lyon (FR)**

(54) **THERMOPLASTIC RESIN COMPOSITION AND MOLDED ARTICLED MANUFACTURED THEREFROM**

(57) A thermoplastic resin composition of the present invention comprises: about 100 parts by weight of a polycarbonate resin; about 0.5 to 15 parts by weight of a polyester resin; about 1 to 20 parts by weight of a phosphate compound; about 1 to 15 parts by weight of a phosphazene compound; about 1 to 15 parts by weight of talc having an average particle size (D50) of about 7 to 20 μm; about 10 to 40 parts by weight of flat plate-shaped glass fiber; and about 1 to 20 parts by weight of mica having an average particle size (D50) of about 250 to 450 μm. The thermoplastic resin composition has excellent flame retardancy, dimensional stability, isotropy, impact resistance, rigidity, exterior characteristics, etc.

【FIG. 1】

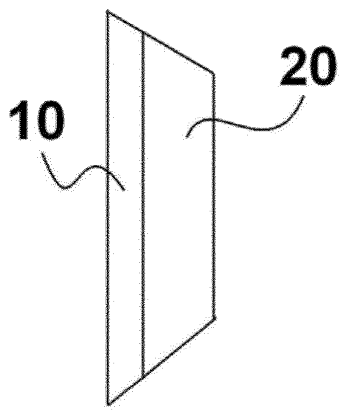


EP 4 692 235 A1

## Description

[Technical Field]

The present invention relates to a thermoplastic resin composition and a molded article formed therefrom. More particularly, the present invention relates to a thermoplastic resin composition that has good properties in terms of flame retardancy, dimensional stability, isotropy, impact resistance, rigidity, appearance characteristics, and the like, and a molded article formed therefrom.

[Background Art]

As engineering plastics, polycarbonate resins have good properties in terms of impact resistance, heat resistance, dimensional stability, weather resistance, flame retardancy, electrical properties, transparency, and the like, and are usefully applied to housings of electric/electronic products, interior/exterior materials of office equipment, and the like. In addition, various fillers may be applied thereto to enhance various properties.

However, fillers, such as glass fibers, talc, mica, wollastonite, and the like, which are used to improve dimensional stability and rigidity of a polycarbonate resin, have different physical properties depending on the type, can suffer from deterioration in appearance characteristics due to protrusion of the fillers and the like, and can cause deterioration in physical properties when added in an excessive amount.

Therefore, there is a need for development of a thermoplastic resin composition having good properties in terms of flame retardancy, dimensional stability, isotropy, impact resistance, rigidity, appearance characteristics, and the like without suffering from such problems.

The background technique of the present invention is disclosed in Korean Patent Laid-open Publication No. 10-2011-0059886 and the like.

[Disclosure]

[Technical Problem]

It is an object of the present invention to provide a thermoplastic resin composition with good properties in terms of flame retardancy, dimensional stability, isotropy, impact resistance, rigidity, appearance characteristics, and the like.

It is another object of the present invention to provide a molded article formed of the thermoplastic resin composition.

The above and other objects of the present invention can be achieved by embodiments of the present invention described below.

[Technical Solution]

1. One aspect of the present invention relates to a thermoplastic resin composition. The thermoplastic resin composition comprises: about 100 parts by weight of a polycarbonate resin; about 0.5 parts by weight to about 15 parts by weight of a polyester resin; about 1 part by weight to about 20 parts by weight of a phosphate compound; about 1 part by weight to about 15 parts by weight of a phosphazene compound; about 1 part by weight to about 15 parts by weight of talc having an average particle diameter (D50) of about 7 μm to about 20 μm; about 10 parts by weight to about 40 parts by weight of flat plate type glass fibers; and about 1 part by weight to about 20 parts by weight of mica having an average particle diameter (D50) of about 250 μm to about 450 μm.
2. In embodiment 1, the polyester resin may comprise at least one of polyethylene terephthalate, polybutylene terephthalate, polyethylene naphthalate, polytrimethylene terephthalate, and polycyclohexylene terephthalate.
3. In embodiment 1 or 2, the flat plate type glass fibers may have a cross-section aspect ratio (long-side length in cross-section/short-side length in cross-section) of about 1.5 to about 10, a cross-section diameter of about 2 μm to about 10 μm, and a pre-processing length of about 1 mm to about 30 mm.
4. In embodiments 1 to 3, the phosphate compound and the phosphazene compound may be present in a weight ratio of about 1:0.3 to about 1:2.
5. In embodiments 1 to 4, the talc and the flat plate type glass fibers may be present in a weight ratio of about 1:2 to about 1:8.
6. In embodiments 1 to 5, the talc and the mica may be present in a weight ratio of about 1:0.5 to about 1:2.
7. In embodiments 1 to 6, the flat plate type glass fibers and the mica may be present in a weight ratio of about 1:0.1 to

about 1:0.6.

8. In embodiments 1 to 7, the thermoplastic resin composition may have a flame retardancy of V-0 or higher, as measured on a 1.5 mm thick injection-molded specimen by the UL-94 vertical test method.

9. In embodiments 1 to 8, the thermoplastic resin composition may have a coefficient of linear expansion of about 15 $\mu$m/m·°C to about 36 $\mu$m/m·°C, as measured on an injection-molded specimen having a size of 10 mm × 10 mm × 3.2 mm while increasing temperature from -20°C to 100°C at 5°C/min in accordance with ASTM D696.

10. In embodiments 1 to 9, the thermoplastic resin composition may have an isotropy of about 1.1 to about 1.3, as calculated according to Equation 1.

Isotropy = Coefficient of TD linear expansion/Coefficient of MD linear expansion, [Equation 1]

where the coefficient of TD linear expansion is a value measured on an injection-molded specimen having a size of 10 mm × 10 mm × 3.2 mm in a transverse direction (TD) and the coefficient of MD linear expansion is a value measured on the specimen in a machine direction (MD) while increasing temperature from -20°C to 100°C at 5°C /min in accordance with ASTM D696.

11. In embodiments 1 to 10, the thermoplastic resin composition may have a notched Izod impact strength of about 5 kgf·cm/cm to about 20 kgf·cm/cm, as measured on a 1/8" thick specimen in accordance with ASTM D256.

12. In embodiments 1 to 11, the thermoplastic resin composition may have a flexural modulus of about 70,000 kgf/cm$^2$ to about 140,000 kgf/cm$^2$, as measured on a 6.4 mm thick specimen at 2.8 mm/min in accordance with ASTM D790.

13. Another aspect of the invention relates to a molded article. The molded article is formed of a thermoplastic resin composition according to any one of embodiments 1 to 12.

14. In embodiment 13, the molded article may be a plastic member of an electronic device housing comprising a metal frame and a plastic member adjoining at least one surface of the metal frame.

[Advantageous Effects]

The present invention provides a thermoplastic resin composition with good properties in terms of flame retardancy, dimensional stability, isotropy, impact resistance, rigidity, appearance characteristics, and the like, and a molded article formed of the same.

[Description of Drawings]

FIG. 1 is a schematic cross-sectional view of an electronic device housing according to one embodiment of the present invention.

[Best Mode ]

Hereinafter, embodiments of the present invention will be described in detail.

The thermoplastic resin compositions according to the present invention includes (A) a polycarbonate resin; (B) a polyester resin; (C) a phosphate compound; (D) a phosphazene compound; (E) talc; (F) flat plate type glass fibers; and (G) mica.

As used herein to represent a specific numerical range, "a to b" is defined as "≥a and ≤b".

(A) Polycarbonate resin

The polycarbonate resin according to one embodiment of the invention may include a polycarbonate resin used in typical thermoplastic resin compositions. For example, the polycarbonate resin may be an aromatic polycarbonate resin prepared by reacting diphenols (aromatic diol compounds) with a precursor, such as phosgene, halogen formate, or carbonate diester.

In some embodiments, the diphenols may include, for example, 4,4'-biphenol, 2,2-bis(4-hydroxyphenyl)-propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis-(3,5-dichloro-4-hydroxyphenyl)propane, without being limited thereto. For example, the diphenols may be 2,2-bis(4-hydroxyphenyl)propane, 2,2-bis(3,5-dichloro-4-hydroxyphenyl)propane, or 1,1-bis(4-hydroxyphenyl) cyclohexane, specifically 2,2-bis(4-hydroxyphenyl)propane, which is also referred to as bisphenol-A.

In some embodiments, the polycarbonate resin may be a branched polycarbonate resin. For example, the polycarbonate resin may be a polycarbonate resin prepared by adding a tri- or higher polyfunctional compound, specifically, a tri- or higher valent phenol group-containing compound, in an amount of about 0.05 mol% to about 2 mol% based on the total number of moles of the diphenols used in polymerization.

In some embodiments, the polycarbonate resin may be a homopolycarbonate resin, a copolycarbonate resin, or a blend thereof. In addition, the polycarbonate resin may be partially or completely replaced by an aromatic polyester-carbonate resin prepared by polymerization in the presence of an ester precursor, for example, a bifunctional carboxylic acid

In some embodiments, the polycarbonate resin may have a weight average molecular weight (Mw) of about 10,000 g/mol to about 200,000 g/mol, for example, about 15,000 g/mol to about 80,000 g/mol, as measured by gel permeation chromatography (GPC). Within this range, the thermoplastic resin composition can have good fluidity (processability), and the like.

(B) Polyester resin

The polyester resin according to one embodiment of the invention may applied to the polycarbonate resin together with the phosphate compound, the phosphazene compound, the talc, the flat plate type glass fibers, the mica, and the like to improve flame retardancy, dimensional stability, isotropy, impact resistance, rigidity, appearance characteristics, property balance therebetween, and the like of the thermoplastic resin composition, and may be a polyester resin used in typical thermoplastic resin compositions. For example, the polyester resin may be prepared by polycondensation of a dicarboxylic acid component with a diol component, wherein the dicarboxylic acid component may include aromatic dicarboxylic acids, such as terephthalic acid (TPA), isophthalic acid (IPA), 1,2-naphthalene dicarboxylic acid, 1,4-naphthalene dicarboxylic acid, 1,5-naphthalene dicarboxylic acid, 1,6-naphthalene dicarboxylic acid, 1,7-naphthalene dicarboxylic acid, 1,8-naphthalene dicarboxylic acid, 2,3-naphthalene dicarboxylic acid, 2,6-naphthalene dicarboxylic acid, 2,7-naphthalenedicarboxylic acid and the like, aromatic dicarboxylates, such as dimethyl terephthalate (DMT), dimethyl isophthalate, dimethyl-1,2-naphthalate, dimethyl-1,5-naphthalate, dimethyl-1,7-naphthalate, dimethyl-1,8-naphthalate, dimethyl-2,3-naphthalate, dimethyl-2,6-naphthalate, dimethyl-2,7-naphthalate, and the like; and the diol component may include ethylene glycol, 1,2-propylene glycol, 1,3-propylene glycol, 2,2-dimethyl-1,3-propanediol, 1,3-butanediol, 1,4-butanediol, 1,5-pentanediol, 1,5-pentanediol, 1,6-hexanediol, a cycloalkylene diol, and the like.

In some embodiments, the polyester resin may comprise at least one of polyethylene terephthalate (PET), polybutylene terephthalate (PBT), polyethylene naphthalate (PEN), polytrimethylene terephthalate (PTT), and polycyclohexylene terephthalate. For example, the polyester resin may be polyethylene terephthalate, polybutylene terephthalate, a combination thereof, or the like.

In some embodiments, the polyester resin of the present invention may have an intrinsic viscosity of about 0.6 dl/g to about 1.5 dl/g, for example, about 0.7 dl/g to about 1.3 dl/g, as measured on a specimen using an Ubbelohde viscometer (capillary viscometer) at 25°C, in which the specimen is prepared by dissolving the polyester resin in an o-chlorophenol solution (concentration: 0.5 g/dl). Within this range, the thermoplastic resin composition can have good properties in terms of processability, dimensional stability, and the like.

In some embodiments, the polyester resin may be present in an amount of about 0.5 to about 15 parts by weight, for example, about 1 to about 10 parts by weight, relative to about 100 parts by weight of the polycarbonate resin. If the content of the polyester resin is less than about 0.5 parts by weight relative to about 100 parts by weight of the polycarbonate resin, the thermoplastic resin composition (molded product) can suffer from deterioration in dimensional stability, isotropy, and the like, and if the content of the polyester resin exceeds about 15 parts by weight, the thermoplastic resin composition (molded product) can suffer from deterioration in flame retardancy, isotropy, impact resistance, and the like.

(C) Phosphate compound

The phosphate compound according to one embodiment of the present invention may be applied to the polycarbonate resin together with the polyester resin, the phosphazene compound, the talc, the flat plate type glass fibers, the mica, and the like to improve flame retardancy, dimensional stability, isotropy, impact resistance, rigidity, appearance characteristics, property balance therebetween, and the like of the thermoplastic resin composition, and may be a phosphate compound used in typical flame retardant thermoplastic resin compositions.

In some embodiments, the phosphate compound may include diaryl phosphate, such as diphenyl phosphate and the like, triphenyl phosphate, tricresyl phosphate, trixylenyl phosphate, tri(2,6-dimethylphenyl) phosphate, tri(2,4,6-trimethylphenyl) phosphate, tri(2,4-di-tert-butylphenyl) phosphate, tri(2,6-dimethylphenyl) phosphate, bisphenol-A bis(diphenyl phosphate), resorcinol bis(diphenyl phosphate), resorcinol bis[bis(2,6-dimethylphenyl) phosphate], resorcinol bis [bis(2,4-di-tert-butylphenyl) phosphate], hydroquinone bis[bis(2,6-dimethylphenyl) phosphate], hydroquinone bis [bis(2,4-di-tert-butylphenyl) phosphate], and the like. These may be used alone or as a mixture thereof. For example, the phosphate compound may be an oligomer type bisphenol-A diphosphate or the like.

In some embodiments, the phosphate compound may be present in an amount of about 1 to about 20 parts by weight, for example, about 5 to about 15 parts by weight, relative to about 100 parts by weight of the polycarbonate resin. If

the content of the phosphate compound is less than about 1 part by weight relative to about 100 parts by weight of the polycarbonate resin, the thermoplastic resin composition can suffer from deterioration in flame retardancy, appearance characteristics (injection moldability), and the like, and if the content of the phosphate compound exceeds about 20 parts by weight, the thermoplastic resin composition can suffer from deterioration in isotropy, impact resistance, and the like.

(D) Phosphazene compound

The phosphazene compound according to one embodiment of the invention may be applied to the polycarbonate resin together with the polyester resin, the phosphate compound, the phosphazene compound, the talc, the flat plate type glass fibers, the mica, and the like to improve flame retardancy, dimensional stability, isotropy, impact resistance, rigidity, appearance characteristics, property balance therebetween, and the like of the thermoplastic resin composition, and may be a phosphazene compound used in typical flame retardant thermoplastic resin compositions.

In some embodiments, the phosphazene compound may include a phosphazene compound represented by Formula 1.

[Formula 1]

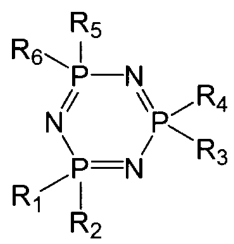

In Formula, $R_1$, $R_2$, $R_3$, $R_4$, $R_5$ and $R_6$ are each independently a hydrogen atom, a halogen atom, a substituted or unsubstituted $C_1$ to $C_{20}$ alkyl group, a substituted or unsubstituted $C_2$ to $C_7$ alkenyl group, a substituted or unsubstituted $C_3$ to $C_{20}$ cycloalkyl group, a substituted or unsubstituted $C_2$ to $C_{20}$ heterocycloalkyl group, a $C_1$ to $C_{20}$ alkoxy group, a $C_6$ to $C_{20}$ aryl or aryloxy group, a Cs to $C_{20}$ heteroaryl group, a substituted or unsubstituted $C_3$ to $C_{20}$ alkoxycarbonylalkyl group, a substituted or unsubstituted a $C_2$ to $C_{20}$ carbonylalkyl group, an amino group, or a hydroxyl group.

Herein, "substituted" means that a hydrogen atom is substituted with a substituent, such as a $C_1$ to $C_{10}$ alkyl group, a halogen atom, a nitro group, a cyano group, a hydroxyl group, an amino group, a $C_6$ to $C_{10}$ aryl group, a $C_3$ to $C_{10}$ cycloalkyl group, a $C_3$ to $C_{10}$ heterocycloalkyl group, a $C_4$ to $C_{10}$ heteroaryl group, or a combination thereof.

In addition, "alkyl," "alkoxy," and other "alkyl" moiety-containing substituents include both linear and branched forms, "alkenyl" includes both linear and branched forms having 2 to 8 carbon atoms and containing at least one double bond, and "cycloalkyl" includes both saturated monocyclic and saturated bicyclic ring structures having 3 to 20 carbon atoms. In addition, "aryl" refers to a cyclic organic radical derived from an aromatic hydrocarbon by removal of one hydrogen atom and includes single or fused ring systems in which each ring suitably contains 4 to 7, preferably 5 or 6, skeletal atoms. Specific examples of "aryl" may include phenyl, naphthyl, biphenyl, tolyl, and the like.

In addition, "heterocycloalkyl" refers to a cycloalkyl group containing 1 to 3 heteroatoms selected from among N, O, and S as a skeletal atom of a saturated cyclic hydrocarbon structure and containing carbon as remaining skeletal atoms of a saturated monocyclic or bicyclic ring structure, and may include, for example, pyrrolidinyl, azetidinyl, pyrazolidinyl, oxazolidinyl, piperidinyl, piperazinyl, morpholinyl, thiomorpholinyl, thiazolidinyl, hydantoinyl, valerolactamyl, oxiranyl, oxetanyl, dioxolanyl, dioxanyl, oxathiolanyl, oxathianyl, dithianyl, dihydrofuranyl, tetrahydrofuranyl, dihydropyranyl, tetrahydropyranyl, tetrahydropyridinyl, tetrahydropyrimidinyl, tetrahydrothiophenyl, tetrahydrothiopyranyl, diazepanyl, azepanyl, and the like.

In addition, "heteroaryl" refers to an aryl group containing 1 to 3 heteroatoms selected from among N, O, and S as a skeletal atom of an aromatic ring structure and containing carbon as remaining skeletal atoms of the aromatic ring structure. The heteroaryl group includes divalent aryl groups in which a heteroatom in the ring structure is oxidized or quaternized to form, for example, an N-oxide or a quaternary salt. Specific examples of "heteroaryl" may include furyl, thienyl, pyrrolyl, pyranyl, imidazolyl, pyrazolyl, thiazolyl, thiadiazolyl, isothiazolyl, isoxazolyl, oxazolyl, oxadiazolyl, triazinyl, tetrazinyl, triazolyl, tetrazolyl, furazanyl, pyridyl, pyrazinyl, pyrimidinyl, pyridazinyl, and the like.

In some embodiments, the phosphazene compound may be present in an amount of about 1 to about 15 parts by weight, for example, about 5 to about 10 parts by weight, relative to about 100 parts by weight of the polycarbonate resin. If the content of the phosphazene compound is less than about 1 part by weight relative to about 100 parts by weight of the above polycarbonate resin, the thermoplastic resin composition can suffer from deterioration in flame retardancy and the like, and if the content of the phosphazene compound exceeds about 15 parts by weight, the thermoplastic resin

composition can suffer from deterioration in isotropy, impact resistance, and the like.

In some embodiments, the phosphate compound and the phosphazene compound may be present in a weight ratio (phosphate compound:phosphazene compound) of about 1:0.3 to about 1:2, for example, about 1:0.4 to about 1:1.7. Within this range, the thermoplastic resin composition can have better flame retardancy, and the like.

(E) Talc

The talc according to one embodiment of the present invention may be applied to the polycarbonate resin together with the polyester resin, the phosphate compound, the phosphazene compound, the flat plate type glass fibers, the mica, and the like to improve flame retardancy, dimensional stability, isotropy, impact resistance, rigidity, appearance characteristics, property balance therebetween, and the like of the thermoplastic resin composition, and may be talc having an average particle diameter (D50) of about 7 μm to about 20 μm.

In some embodiments, the talc refers to flake type fillers and has an average particle diameter (D50) of about 7 μm to about 20 μm, for example, about 8 μm to about 14 μm, as measured by a laser particle size analyzer (manufacturer: Beckman Coulter, device name: LS 13 320). If the average particle diameter (D50) of the talc is less than about 7 μm, the thermoplastic resin composition can suffer from deterioration in dimensional stability, impact resistance, and the like, and if the average particle diameter of the talc exceeds about 20 μm, the thermoplastic resin composition can suffer from deterioration in impact resistance, appearance characteristics, and the like.

In some embodiments, the talc may be present in an amount of about 1 to about 15 parts by weight, for example, about 5 to about 10 parts by weight, relative to about 100 parts by weight of the polycarbonate resin. If the content of the talc is less than about 1 part by weight relative to about 100 parts by weight of the polycarbonate resin, the thermoplastic resin composition can suffer from deterioration in isotropy and the like, and if the content of the talc exceeds about 15 parts by weight, the thermoplastic resin composition can suffer from deterioration in flame retardancy, impact resistance, and the like.

(F) Flat plate type glass fiber

The flat type glass fibers according to one embodiment of the present invention may be applied to the polycarbonate resin together with the polyester resin, the phosphate compound, the phosphazene compound, the phosphazene compound, the talc, and the mica, and the like to improve flame retardancy, dimensional stability, isotropy, impact resistance, rigidity, appearance characteristics, property balance therebetween, and the like of the thermoplastic resin composition.

In some embodiments, the flat plate type glass fibers may have a rectangular cross-section. For example, the flat plate type glass fibers may have a cross-sectional aspect ratio (long-side length in cross-section/short-side length in cross-section) of about 1.5 to about 10, for example, about 2 to about 8, a short-side length of about 2 μm to about 10 μm, for example, about 4 μm to about 8 μm, and a pre-processing length of about 1 mm to about 5 mm, for example, about 2 mm to about 4 mm, as measured by a scanning electron microscope (manufacturer: JEOL, Product name: JSM-6390A). Within these ranges, the thermoplastic resin composition can have good rigidity, appearance characteristics, and the like.

In some embodiments, the flat plate type glass fibers may be treated with a typical surface treatment agent.

In some embodiments, the flat plate type glass fibers may be present in an amount of about 10 to about 40 parts by weight, for example, about 20 to about 40 parts by weight, relative to about 100 parts by weight of the polycarbonate resin. If the content of the flat plate type glass fibers is less than about 10 parts by weight relative to about 100 parts by weight of the polycarbonate resin, the thermoplastic resin composition can suffer from deterioration in dimensional stability, isotropy, rigidity, and the like, and if the content of the flat plate type glass fibers exceeds about 40 parts by weight, the thermoplastic resin composition can suffer from deterioration in flame retardancy, dimensional stability, isotropy, and the like.

In some embodiments, the talc and the flat plate type glass fibers may be present in a weight ratio (talc:flat plate type glass fiber) of about 1:2 to about 1:8, for example, about 1:2.5 to about 1:7. Within this range, the thermoplastic resin composition can have better dimensional stability, appearance characteristics, and the like.

(G) Mica

The mica according to one embodiment of the present invention may be applied to the polycarbonate resin together with the polyester resin, the phosphate compound, the phosphazene compound, the phosphazene compound, the talc, the flat plate type glass fibers, and the like to improve flame retardancy, dimensional stability, isotropy, impact resistance, rigidity, appearance characteristics, property balance therebetween, and the like of the thermoplastic resin composition, and may include mica having an average particle diameter (D50) of about 250 μm to about 450 μm.

In some embodiments, the mica may have an average particle diameter (D50) of about 250 μm to about 450 μm, for example, about 300 μm to about 400 μm, as measured using a particle size analyzer (Malvern Mastersizer 3000). If the

average particle diameter of the mica is less than about 250 μm, the thermoplastic resin composition can suffer from deterioration in dimensional stability, isotropy, and the like, and if the average particle diameter of the mica exceeds about 450 μm, the thermoplastic resin composition can suffer from deterioration in in terms of impact resistance, and the like.

In some embodiments, the mica may be present in an amount of about 1 to about 20 parts by weight, for example, about 5 to about 15 parts by weight, relative to about 100 parts by weight of the polycarbonate resin. If the content of the mica is less than about 1 part by weight relative to about 100 parts by weight of the polycarbonate resin, the thermoplastic resin composition can suffer from deterioration in isotropy and the like, and if the content of the mica exceeds about 20 parts by weight, the thermoplastic resin composition can suffer from deterioration in flame retardancy, impact resistance, and the like.

In some embodiments, the talc and the mica may be present in a weight ratio (talc:mica) of about 1:0.5 to about 1:2, for example, about 1:0.6 to about 1:1.9. Within this range, the thermoplastic resin composition can have better dimensional stability, isotropy, appearance characteristics, and the like.

In some embodiments, the flat plate type glass fibers and the mica may be present in a weight ratio (flat plate type glass fiber:mica) of about 1:0.1 to about 1:0.6, for example, about 1:0.1 to about 1:0.5. Within this range, the thermoplastic resin composition can have better dimensional stability, isotropy, rigidity, and the like.

The thermoplastic resin composition according to one embodiment of the present invention may further comprise additives included in typical thermoplastic resin compositions. The additives may include antioxidants, anti-dripping agents, lubricants, release agents, nucleating agents, antistatic agents, stabilizers, pigments, dyes, mixtures thereof, and the like, without being limited thereto. The additives may be present in an amount of about 0.001 to about 40 parts by weight, for example, about 0.1 to about 10 parts by weight, relative to about 100 parts by weight of the polycarbonate resin.

The thermoplastic resin composition according to one embodiment of the invention may be prepared in pellet form by mixing the aforementioned components, followed by melt extrusion at about 200°C to about 300°C, for example, at about 230°C to about 290°C, using a typical twin-screw extruder.

In some embodiments, the thermoplastic resin composition may have a flame retardancy of V-0 or higher, as measured on a 1.5 mm thick injection-molded specimen by the UL-94 vertical test method.

In some embodiments, the thermoplastic resin composition may have a coefficient of linear expansion of about 15 μm/m·°C to about 36 μm/m·°C, for example, about 16 μm/m·°C to about 35 μm/m·°C, as measured on an injection-molded specimen having a size of 10 mm × 10 mm × 3.2 mm while increasing temperature from -20°C to 100°C at 5°C/min in accordance with ASTM D696.

In some embodiments, the thermoplastic resin composition may have an isotropy of about 1.1 to about 1.3, as calculated according to Equation 1.

Isotropy = Coefficient of TD linear expansion/Coefficient of MD linear expansion [Equation 1]

In Equation 1, the coefficient of TD linear expansion is a value measured on an injection-molded specimen having a size of 10 mm × 10 mm × 3.2 mm in a transverse direction (TD) and the coefficient of MD linear expansion is a value measured on the specimen in a machine direction (MD) while increasing temperature from -20°C to 100°C at 5°C/min in accordance with ASTM D696.

In some embodiments, the thermoplastic resin composition may have a notched Izod impact strength of about 5 kgf·cm/cm to about 20 kgf·cm/cm, for example, about 6 kgf·cm/cm to about 15 kgf·cm/cm, as measured on a 1/8" thick specimen in accordance with ASTM D256.

In some embodiments, the thermoplastic resin composition may have a flexural modulus of about 70,000 $kgf/cm^2$ to about 140,000 $kgf/cm^2$, for example, about 75,000 $kgf/cm^2$ to about 130,000 $kgf/cm^2$, as measured on a 6.4 mm thick specimen at 2.8 mm/min in accordance with ASTM D790.

A molded article according to the present invention is formed of the thermoplastic resin composition. The thermoplastic resin composition may be prepared in pellet form and the prepared pellets may be produced into various molded articles (products) by various molding methods, such as injection molding, extrusion molding, vacuum molding, casting, and the like. These molding methods are well known to a person having ordinary knowledge in the art. The molded article has good properties in terms of flame retardancy, dimensional stability, isotropy, impact resistance, rigidity, appearance characteristics, property balance therebetween, and the like, and can be useful as interior/exterior materials for electrical and electronic products, thin film sheets, and the like.

In some embodiments, the molded article may be a plastic member of an electronic device housing comprising a metal frame and a plastic member adjoining at least one surface of the metal frame.

FIG. 1 is a schematic sectional view of a housing of an electronic product according to one embodiment of the present invention. It should be understood that the drawings are not to precise scale and the dimensions of components are exaggerated for clarity of description in the drawings. Referring to FIG. 1, the housing of an electronic product according to one embodiment includes a metal frame 10 and at least one plastic member 20 adjoining at least one surface

of the metal frame 10, wherein the plastic member is formed of the thermoplastic resin composition according to the embodiments of the invention.

In some embodiments, the metal frame 10 and the plastic member 20 may have various shapes without being limited to the shapes shown in the drawings. The metal frame 10 and the plastic member 20 form an adjoining structure in which the metal frame 10 adjoins at least one surface of the plastic member 20. The adjoining structure may be realized by bonding or insertion, without being limited thereto.

In some embodiments, the metal frame 10 may be a stainless steel frame or may be selected from among any commercially available products, typically used for electronic product housings.

In some embodiments, the plastic member 20 may be formed of the polycarbonate resin composition by various molding methods, such as injection molding, extrusion molding, vacuum molding, casting, and the like. Specifically, the plastic member 20 may be formed by hot-water molding, steam molding (RHCM (rapid heat cycle molding)) or the like, and may be a front cover or a rear cover for 22" to 85" thin-film TVs, thin-film monitors, and the like. The plastic member 20 is applicable to external appearance specifications, such as a hairline pattern, a corrosion pattern, and the like.

[Mode for Invention]

Next, the present invention will be described in more detail with reference to some examples. It should be understood that these examples are provided for illustration only and are not to be construed in any way as limiting the invention.

## EXAMPLE

Details of components used in Examples and Comparative Examples are as follows.

(A) Polycarbonate resin

A bisphenol-A type polycarbonate resin having a weight average molecular weight (Mw) of about 25,000 g/mol was used.

(B) Polyester resin

Polyethylene terephthalate (PET, manufacturer: Lotte Chemical Co., Ltd., intrinsic viscosity: about 0.765 dl/g) was used.

(C) Phosphate compound

Bisphenol-A diphosphate (manufacturer: Yoke Chemical Co., Ltd., product name: YOKE BDP) was used.

(D) Phosphazene compound

A phosphazene compound (manufacturer: Pharmicell Co., Ltd., product name: Phoretar) was used.

(E) Talc

Talc having an average particle diameter (D50) of about 10 μm (manufacturer: KOCH, product name: KCP-04) was used.

(F) Glass fiber

(F1) Rectangular cross-sectional flat plate type glass fiber (manufacturer: Nittobo Co., Ltd., product name: CSG 3PA-832) having an aspect ratio (long-side length in cross-section/short-side length in cross-section) of about 4, a short-side length of about 7 μm, and a pre-processing length of about 3 mm was used.

(F2) Circular cross-sectional glass fiber (manufacturer: KCC Co., Ltd., product name: CS321-EC10-3) having a cross-section diameter of about 13 μm and a pre-processing length of about 3 mm was used.

(G) Mica

(G1) Mica (manufacturer: KOCH, product name: M-50) having an average particle diameter (D50) of about 350

μm was used.

(G2) Mica having an average particle diameter (D50) of about 200 μm (manufacturer: KOCH, product name: M50-1) was used.

(G3) Mica having an average particle diameter (D50) of about 500 μm (manufacturer: KOCH, product name: M50-2) was used.

**Examples 1 to 13 and Comparative Examples 1 to 15**

The aforementioned components were mixed in amounts as listed in Tables 1, 2, 3, 4, and 5, followed by extrusion at about 260°C, thereby preparing a thermoplastic resin composition in pellet form. Here, extrusion was performed using a twin-screw extruder (L/D: 36, diameter: 45 mm). The prepared pellets were dried at about 80°C for about 4 hours or more and then subjected to injection molding using a 6 oz. injection machine (molding temperature: about 260°C, mold temperature: about 60°C), thereby preparing a specimen. The prepared specimen was evaluated as to the following properties. Results are shown in Tables 1, 2, 3, 4, and 5.

Property evaluation

(1) Flame retardancy: Flame retardancy was measured on a 0.8 mm thick injection-molded specimen by the UL-94 vertical test method.

(2) Dimensional stability: Coefficient of linear expansion (unit: μm/m·°C) was measured on an injection-molded specimen having a size of 10 mm × 10 mm × 3.2 mm while increasing temperature from -20°C to 100°C at 5°C/min using a thermomechanical analyzer in accordance with ASTM D696.

(3) Isotropy: Isotropy was calculated according to Equation 1.

Isotropy = Coefficient of TD linear expansion/Coefficient of MD linear expansion [Equation 1]

In Equation 1, the coefficient of TD linear expansion is a value measured on an injection-molded specimen having a size of 10 mm × 10 mm × 3.2 mm in the transverse direction (TD) and the coefficient of MD linear expansion is a value measured on the specimen in the machine direction (MD) while increasing temperature from -20°C to 100°C at 5°C /min in accordance with ASTM D696.

(4) Impact resistance: Notched Izod impact strength (unit: kgf·cm/cm) was measured on a 1/8" thick specimen in accordance with ASTM D256.

(5) Rigidity: Flexural modulus (unit: $kgf/cm^2$) was measured on a 6.4 mm thick specimen at 2.8 mm/min in accordance with ASTM D790.

Table 1

| | Example | | | | | | |
|---|---|---|---|---|---|---|---|
| | 1 | 2 | 3 | 4 | 5 | 6 | 7 |
| (A) (parts by weight) | 100 | 100 | 100 | 100 | 100 | 100 | 100 |
| (B) (parts by weight) | 1 | 3 | 10 | 3 | 3 | 3 | 3 |
| (C) (parts by weight) | 12 | 12 | 12 | 5 | 12 | 12 | 12 |
| (D) (parts by weight) | 8 | 8 | 8 | 8 | 8 | 5 | 10 |
| (E) (parts by weight) | 8 | 8 | 8 | 8 | 8 | 8 | 8 |
| (F1) (parts by weight) | 35 | 35 | 35 | 35 | 35 | 35 | 35 |
| (F2) (parts by weight) | - | - | - | - | - | - | - |
| (G1) (parts by weight) | 7 | 7 | 7 | 7 | 7 | 7 | 7 |
| (G2) (parts by weight) | - | - | - | - | - | - | - |
| (G3) (parts by weight) | - | - | - | - | - | - | - |
| Flame retardancy | V-0 | V-0 | V-0 | V-0 | V-0 | V-0 | V-0 |

(continued)

| | Example | | | | | | |
|---|---|---|---|---|---|---|---|
| | 1 | 2 | 3 | 4 | 5 | 6 | 7 |
| Coefficient of linear expansion | 30 | 25 | 30 | 25 | 31 | 30 | 25 |
| Isotropy (TD/MD) | 1.2 | 1.2 | 1.3 | 1.2 | 1.3 | 1.2 | 1.3 |
| Notched Izod impact strength | 9 | 11 | 6 | 13 | 6 | 12 | 8 |
| Flexural modulus | 100,000 | 110,000 | 110,000 | 120,000 | 95,000 | 110,000 | 100,000 |

Table 2

| | Example | | | | | |
|---|---|---|---|---|---|---|
| | 8 | 9 | 10 | 11 | 12 | 13 |
| (A) (parts by weight) | 100 | 100 | 100 | 100 | 100 | 100 |
| (B) (parts by weight) | 3 | 3 | 3 | 3 | 3 | 3 |
| (C) (parts by weight) | 12 | 12 | 12 | 12 | 12 | 12 |
| (D) (parts by weight) | 8 | 8 | 8 | 8 | 8 | 8 |
| (E) (parts by weight) | 5 | 10 | 8 | 8 | 8 | 8 |
| (F1) (parts by weight) | 35 | 35 | 20 | 40 | 35 | 35 |
| (F2) (parts by weight) | - | - | - | - | - | - |
| (G1) (parts by weight) | 7 | 7 | 7 | 7 | 5 | 15 |
| (G2) (parts by weight) | - | - | - | - | - | - |
| (G3) (parts by weight) | - | - | - | - | - | - |
| Flame retardancy | V-0 | V-0 | V-0 | V-0 | V-0 | V-0 |
| Coefficient of linear expansion | 31 | 25 | 35 | 18 | 30 | 18 |
| Isotropy (TD/MD) | 1.2 | 1.2 | 1.3 | 1.3 | 1.3 | 1.2 |
| Notched Izod impact strength | 13 | 6 | 12 | 12 | 12 | 12 |
| Flexural modulus | 100,000 | 120,000 | 75,000 | 130,000 | 115,000 | 125,000 |

Table 3

| | Comparative Example | | | | | |
|---|---|---|---|---|---|---|
| | 1 | 2 | 3 | 4 | 5 | 6 |
| (A) (parts by weight) | 100 | 100 | 100 | 100 | 100 | 100 |
| (B) (parts by weight) | 0.1 | 0.1 | 3 | 3 | 3 | 3 |
| (C) (parts by weight) | 12 | 12 | 1 | 20 | 12 | 12 |
| (D) (parts by weight) | 8 | 8 | 8 | 8 | 0.5 | 20 |
| (E) (parts by weight) | 8 | 8 | 8 | 8 | 8 | 8 |
| (F1) (parts by weight) | 35 | 35 | 35 | 35 | 35 | 35 |
| (F2) (parts by weight) | - | - | - | - | - | - |
| (G1) (parts by weight) | 7 | 7 | 7 | 7 | 7 | 7 |
| (G2) (parts by weight) | - | - | - | - | - | - |
| (G3) (parts by weight) | - | - | - | - | - | - |
| Flame retardancy | V-0 | V-2 | V-2 | V-0 | V-2 | V-0 |
| Coefficient of linear expansion | 40 | 35 | 25 | 35 | 25 | 35 |

(continued)

| | Comparative Example | | | | | |
|---|---|---|---|---|---|---|
| | 1 | 2 | 3 | 4 | 5 | 6 |
| Isotropy (TD/MD) | 1.4 | 1.9 | 1.2 | 1.7 | 1.2 | 1.6 |
| Notched Izod impact strength | 12 | 3 | 13 | 4 | 12 | 4 |
| Flexural modulus | 100,000 | 120,000 | 120,000 | 80,000 | 110,000 | 80,000 |

Table 4

| | Comparative Example | | | | |
|---|---|---|---|---|---|
| | 7 | 8 | 9 | 10 | 11 |
| (A) (parts by weight) | 100 | 100 | 100 | 100 | 100 |
| (B) (parts by weight) | 3 | 3 | 3 | 3 | 3 |
| (C) (parts by weight) | 12 | 12 | 12 | 12 | 12 |
| (D) (parts by weight) | 8 | 8 | 8 | 8 | 8 |
| (E) (parts by weight) | 0.5 | 20 | 8 | 8 | 8 |
| (F1) (parts by weight) | 35 | 35 | 5 | 45 | - |
| (F2) (parts by weight) | | | - | - | 35 |
| (G1) (parts by weight) | 7 | 7 | 7 | 7 | 7 |
| (G2) (parts by weight) | | | - | - | - |
| (G3) (parts by weight) | | | - | - | - |
| Flame retardancy | V-0 | V-2 | V-0 | V-1 | V-0 |
| Coefficient of linear expansion | 32 | 22 | 55 | 13 | 12 |
| Isotropy (TD/MD) | 1.7 | 1.3 | 2.1 | 1.4 | 1.5 |
| Notched Izod impact strength | 11 | 3 | 20 | 9 | 9 |
| Flexural modulus | 99,000 | 115,000 | 35,000 | 140,000 | 120,000 |

Table 5

| | Comparative Example | | | |
|---|---|---|---|---|
| | 12 | 13 | 14 | 15 |
| (A) (parts by weight) | 100 | 100 | 100 | 100 |
| (B) (parts by weight) | 3 | 3 | 3 | 3 |
| (C) (parts by weight) | 12 | 12 | 12 | 12 |
| (D) (parts by weight) | 8 | 8 | 8 | 8 |
| (E) (parts by weight) | 8 | 8 | 8 | 8 |
| (F1) (parts by weight) | 35 | 35 | 35 | 35 |
| (F2) (parts by weight) | - | - | - | - |
| (G1) (parts by weight) | 0.1 | 20 | - | - |
| (G2) (parts hv weight) | - | - | 7 | - |
| (G3) (parts hv weight) | - | - | - | 7 |
| Flame retardancy | V-0 | V-1 | V-0 | V-0 |
| Coefficient of linear expansion | 35 | 20 | 37 | 25 |
| Isotropy (TD/MD) | 1.6 | 1.2 | 1.4 | 1.2 |

(continued)

| | Comparative Example | | | |
|---|---|---|---|---|
| | 12 | 13 | 14 | 15 |
| Notched Izod impact strength | 12 | 4 | 14 | 4 |
| Flexural modulus | 100,000 | 120,000 | 110,000 | 110,000 |

From the above results, it could be seen that the thermoplastic resin compositions of the present invention had good properties in terms of flame retardancy, dimensional stability (coefficient of linear expansion), isotropy (coefficient of TD linear expansion/coefficient of MD linear expansion), impact resistance (notched Izod impact strength), rigidity (flexural modulus), and appearance characteristics.

Conversely, it could be seen that the thermoplastic resin composition prepared using an insufficient amount of the polyester resin (Comparative Example 1) suffered from deterioration in dimensional stability, isotropy, and the like, and the thermoplastic resin composition prepared using an excess of the polyester resin (Comparative Example 2) suffered from deterioration in flame retardancy, isotropy, impact resistance, and the like. It could be seen that the thermoplastic resin composition prepared using an insufficient amount of the phosphate compound (Comparative Example 3) suffered from deterioration in flame retardancy and the like, and the thermoplastic resin composition prepared using an excess of the phosphate compound (Comparative Example 4) suffered from deterioration in isotropy, impact resistance, and the like. It could be seen that the thermoplastic resin composition prepared using an insufficient amount of the phosphazene compound (Comparative Example 5) suffered from deterioration in flame retardancy and the like, and the thermoplastic resin composition prepared using an excess of the phosphazene compound (Comparative Example 6) suffered from deterioration in isotropy, impact resistance, and the like. It could be seen that the thermoplastic resin composition prepared using an insufficient amount of the talc (Comparative Example 7) suffered from deterioration in isotropy and the like, and the thermoplastic resin composition prepared using an excess of the talc (Comparative Example 8) suffered from deterioration in flame retardancy, impact resistance, and the like. It could be seen that the thermoplastic resin composition prepared using an insufficient amount of the flat plate type glass fibers (Comparative Example 9) suffered from deterioration in dimensional stability, isotropy, rigidity, and the like, the thermoplastic resin composition prepared using an excess of the flat plate type glass fibers (Comparative Example 10) suffered from deterioration in flame retardancy, dimensional stability, isotropy, and the like, and the thermoplastic resin composition prepared using circular glass fibers (F2) (Comparative Example 11) instead of the flat plate type glass fibers of the present invention suffered from deterioration in dimensional stability, isotropy, and the like. In addition, it could be seen that the thermoplastic resin composition prepared using an insufficient amount of the mica (Comparative Example 12) suffered from deterioration in isotropy and the like, the thermoplastic resin composition prepared using an excess of the mica (Comparative Example 13) suffered from deterioration in flame retardancy, impact resistance, and the like, the thermoplastic resin composition prepared using mica (G2) (Comparative Example 14) instead of the mica of the present invention suffered from deterioration in dimensional stability, isotropy, and the like, and the thermoplastic resin composition prepared using mica (G3) (Comparative Example 15) instead of the mica of the present invention suffered from deterioration in impact resistance, and the like.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

**1.** A thermoplastic resin composition comprising:

about 100 parts by weight of a polycarbonate resin;
about 0.5 parts by weight to about 15 parts by weight of a polyester resin;
about 1 part by weight to about 20 parts by weight of a phosphate compound;
about 1 part by weight to about 15 parts by weight of a phosphazene compound;
about 1 part by weight to about 15 parts by weight of talc having an average particle diameter (D50) of about 7 μm to about 20 μm;
about 10 parts by weight to about 40 parts by weight of flat plate type glass fibers; and

about 1 part by weight to about 20 parts by weight of mica having an average particle diameter (D50) of about 250 μm to about 450 μm.

2. The thermoplastic resin composition according to claim 1, wherein the polyester resin comprises at least one of polyethylene terephthalate, polybutylene terephthalate, polyethylene naphthalate, polytrimethylene terephthalate, and polycyclohexylene terephthalate.

3. The thermoplastic resin composition according to claim 1 or 2, wherein the flat plate type glass fibers have a cross-section aspect ratio (long-side length in cross-section/short-side length in cross-section) of about 1.5 to about 10, a cross-section diameter of about 2 μm to about 10 μm, and a pre-processing length of about 1 mm to about 30 mm.

4. The thermoplastic resin composition according to any one of claims 1 to 3, wherein the phosphate compound and the phosphazene compound are present in a weight ratio of about 1:0.3 to about 1:2.

5. The thermoplastic resin composition according to any one of claims 1 to 4, wherein the talc and the flat plate type glass fibers are present in a weight ratio of about 1:2 to about 1:8.

6. The thermoplastic resin composition according to any one of claims 1 to 5, wherein the talc and the mica are present in a weight ratio of about 1:0.5 to about 1:2.

7. The thermoplastic resin composition according to any one of claims 1 to 6, wherein the flat plate type glass fibers and the mica are present in a weight ratio of about 1:0.1 to about 1:0.6.

8. The thermoplastic resin composition according to any one of claims 1 to 7, wherein the thermoplastic resin composition has a flame retardancy of V-0 or higher, as measured on a 1.5 mm thick injection molded-specimen by a UL-94 vertical test method

9. The thermoplastic resin composition according to any one of claims 1 to 8, wherein the thermoplastic resin composition has a coefficient of linear expansion of about 15 μm/m·°C to about 36 μm/m·°C, as measured on an injection-molded specimen having a size of 10 mm × 10 mm × 3.2 mm while increasing temperature from -20°C to 100°C at 5°C/min in accordance with ASTM D696.

10. The thermoplastic resin composition according to any one of claims 1 to 9, wherein the thermoplastic resin composition has an isotropy of about 1.1 to about 1.3, as calculated according to Equation 1.

Isotropy = Coefficient of TD linear expansion/Coefficient of MD linear expansion [Equation 1]

where the coefficient of TD linear expansion is a value measured on an injection-molded specimen having a size of 10 mm × 10 mm × 3.2 mm in a transverse direction (TD) and the coefficient of MD linear expansion is a value measured on the specimen in a machine direction (MD) while increasing temperature from -20°C to 100°C at 5°C /min in accordance with ASTM D696.

11. The thermoplastic resin composition according to any one of claims 1 to 10, wherein the thermoplastic resin composition has a notched Izod impact strength of about 5 kgf·cm/cm to about 20 kgf·cm/cm, as measured on a 1/8" thick specimen in accordance with ASTM D256.

12. The thermoplastic resin composition according to any one of claims 1 to 11, wherein the thermoplastic resin composition has a flexural modulus of about 70,000 $kgf/cm^2$ to about 140,000 $kgf/cm^2$, as measured on a 6.4 mm thick specimen at 2.8 mm/min in accordance with ASTM D790.

13. A molded article formed of the thermoplastic resin composition according to any one of claims 1 to 12.

14. The molded article according to claim 13, wherein the molded article is a plastic member of an electronic device housing comprising a metal frame and a plastic member adjoining at least one surface of the metal frame.

【FIG. 1】

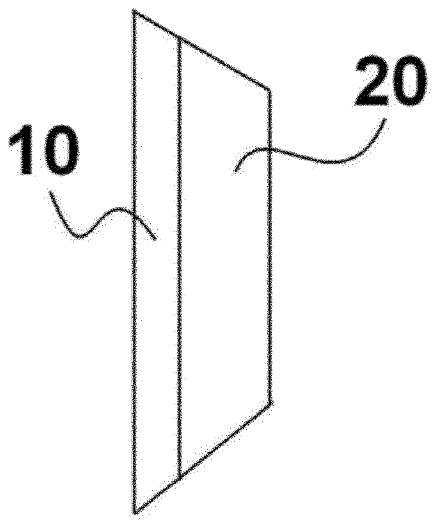

**INTERNATIONAL SEARCH REPORT**

International application No.
**PCT/KR2024/095031**

**A. CLASSIFICATION OF SUBJECT MATTER**

**C08L 69/00**(2006.01)i; **C08L 67/02**(2006.01)i; **C08K 5/521**(2006.01)i; **C08K 5/5399**(2006.01)i; **C08K 3/34**(2006.01)i; **C08K 7/14**(2006.01)i

According to International Patent Classification (IPC) or to both national classification and IPC

**B. FIELDS SEARCHED**

Minimum documentation searched (classification system followed by classification symbols)

C08L 69/00(2006.01); B29C 45/00(2006.01); C08G 64/16(2006.01); C08K 3/34(2006.01); C08K 5/49(2006.01); C08K 5/5399(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리카보네이트(polycarbonate), 폴리에스테르(polyester), 포스페이트(phosphate), 포스파젠(phosphazene), 탈크(talc), 평판형 유리 섬유(flat type glass fiber), 마이카(mica), 열가소성 수지 조성물(thermoplastic resin composition)

**C. DOCUMENTS CONSIDERED TO BE RELEVANT**

| Category* | Citation of document, with indication, where appropriate, of the relevant passages | Relevant to claim No. |
|---|---|---|
| Y | JP 2020-172635 A (MITSUBISHI ENGINEERING PLASTICS CORP.) 22 October 2020 (2020-10-22)<br>See paragraphs [0041], [0069]-[0070], [0077], [0095], [0103]-[0108] and [0129]-[0130]; and table 2. | 1-3 |
| Y | KR 10-2021-0051773 A (LOTTE CHEMICAL CORPORATION) 10 May 2021 (2021-05-10)<br>See claim 1; and paragraphs [0083]-[0119]. | 1-3 |
| A | KR 10-2022-0028623 A (LOTTE CHEMICAL CORPORATION) 08 March 2022 (2022-03-08)<br>See paragraphs [0026] and [0087]. | 3 |
| A | KR 10-2018-0081834 A (SABIC GLOBAL TECHNOLOGIES B.V.) 17 July 2018 (2018-07-17)<br>See entire document. | 1-3 |
| A | KR 10-2015-0132087 A (TEIJIN LIMITED) 25 November 2015 (2015-11-25)<br>See entire document. | 1-3 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 April 2024** | **29 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No. **PCT/KR2024/095031**

**C. DOCUMENTS CONSIDERED TO BE RELEVANT**

| Category* | Citation of document, with indication, where appropriate, of the relevant passages | Relevant to claim No. |
|---|---|---|
| A | KR 10-2011-0068682 A (SAMYANG CORPORATION) 22 June 2011 (2011-06-22) See entire document. | 1-3 |

Form PCT/ISA/210 (second sheet) (July 2022)

**INTERNATIONAL SEARCH REPORT**

International application No.
**PCT/KR2024/095031**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **14**
because they relate to parts of the international application that do not comply with the prescribed requirements to such an extent that no meaningful international search can be carried out, specifically:

Claim 14 refers to a claim violating the manner of referring to a multiple dependent claim (PCT Rule 6.4(a)), and thus is unclear.

3. ☑ Claims Nos.: **4-13**
because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.
**PCT/KR2024/095031**

| Patent document cited in search report | Publication date (day/month/year) | Patent family member(s) | Publication date (day/month/year) |
|---|---|---|---|
| JP 2020-172635 A | 22 October 2020 | CN 113661208 A | 16 November 2021 |
| | | WO 2020-209101 A1 | 15 October 2020 |
| KR 10-2021-0051773 A | 10 May 2021 | CN 114641535 A | 17 June 2022 |
| | | CN 114641535 B | 22 December 2023 |
| | | KR 10-2347830 B1 | 05 January 2022 |
| | | WO 2021-085867 A1 | 06 May 2021 |
| KR 10-2022-0028623 A | 08 March 2022 | CN 115989278 A | 18 April 2023 |
| | | EP 4206284 A1 | 05 July 2023 |
| | | WO 2022-045616 A1 | 03 March 2022 |
| KR 10-2018-0081834 A | 17 July 2018 | CN 105849192 A | 10 August 2016 |
| | | CN 105849192 B | 06 November 2018 |
| | | EP 3049480 A1 | 03 August 2016 |
| | | EP 3049480 B1 | 04 December 2019 |
| | | KR 10-2016-0079786 A | 06 July 2016 |
| | | US 10030139 B2 | 24 July 2018 |
| | | US 2016-0312025 A1 | 27 October 2016 |
| | | US 2017-0313876 A1 | 02 November 2017 |
| | | US 9725594 B2 | 08 August 2017 |
| | | WO 2015-065611 A1 | 07 May 2015 |
| KR 10-2015-0132087 A | 25 November 2015 | CN 105051110 A | 11 November 2015 |
| | | CN 105051110 B | 25 May 2018 |
| | | EP 2977409 A1 | 27 January 2016 |
| | | EP 2977409 A4 | 30 March 2016 |
| | | EP 2977409 B1 | 25 December 2019 |
| | | EP 2977409 B2 | 07 December 2022 |
| | | KR 10-2141725 B1 | 14 September 2020 |
| | | US 10196515 B2 | 05 February 2019 |
| | | US 2016-0024301 A1 | 28 January 2016 |
| | | WO 2014-148641 A1 | 25 September 2014 |
| KR 10-2011-0068682 A | 22 June 2011 | KR 10-1256262 B1 | 18 April 2013 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020110059886